# EUROPÄISCHE PATENTANMELDUNG

(11) **EP 0 640 433 A1**
(43) Veröffentlichungstag der Anmeldung: **01.03.1995**
(21) Anmeldenummer: 94810366.8
(22) Anmeldetag: 22.06.1994
(51) Int. Cl.: B23Q 3/157

(54) **Werkzeugwechsler**

(30) Priorität: 26.08.1993 CH 2545/93
(71) Anmelder: MIKRON AG BIEL, CH-2503 Biel (CH)
(72) Erfinder: Hulliger, Urs, CH-4553 Subingen (CH)
(74) Vertreter: AMMANN PATENTANWAELTE AG BERN

(57) **Zusammenfassung**

Am freien Ende eines Schwenkarms (8) ist ein Greiferträger (9) mit zwei schwenkbaren Greifern (10A, 10B) drehbar gelagert und kann über einen Zahnriemen (13) geschwenkt werden. Bei dieser Schwenkbewegung laufen Steuerrollen (a, b) in einer Steuerkurve (19) einer Kurvenscheibe (15), die über eine Achse (14) wahlweise mit dem Schwenkarm (8) oder mit dem Greiferträger (9) gekuppelt werden kann. Durch Relativdrehung zwischen der Kurvenscheibe 15 und dem Greiferträger 9 können die Greifer rein mechanisch zuverlässig in die jeweils erforderliche Lage zur Uebernahme und Uebergabe von Werkzeugen geschwenkt werden. Auf eine Fernsteuerung und entsprechende Rückmeldung und Ueberwachung der Greiferschwenkung kann in diesem Falle verzichtet werden. Es ist dabei eine zwangsläufige Greifersteuerung in dem Sinne möglich, dass in den beiden Greifern gehaltene Werkzeuge nicht in gegenseitige Kollision geraten können, selbst wenn die Schwenkachsen der Greifer nur um etwa 90° gegeneinander versetzt sind.

## Beschreibung

Die vorliegende Erfindung betrifft einen Werkzeugwechsler gemäss Oberbegriff des Anspruchs 1. Derartige Werkzeugwechsler sind allgemein bekannt, wobei meistens an einem translatorisch verschiebbaren Schwenkarm eine oder zwei Zangen zum Ergreifen von Werkzeugen drehbar angebracht sind. Diese Zange oder Zangen sind in ihrem Träger um etwa 90° drehbar angeordnet, um wahlweise Werkzeuge in eine horizontalachsige oder vertikalachsige Spindel einsetzen bzw. aus derselben entnehmen zu können, und eine Schwenkbewegung des Greifers oder der Greifer kann auch erforderlich sein, wenn die Werkzeuge im Magazin nicht in der gleichen Richtung gehalten sind wie in der Spindel der Werkzeugmaschine. Bei bekannten Werkzeugwechslern werden alle Bewegungen des Schwenkarmes, die Greifbewegungen der Greifer und die Schwenkbewegungen der Greifer durch lokale ferngesteuerte Antriebe ausgeführt. Das bedingt insbesondere für die Schwenkbewegungen des Greifers oder der Greifer aufwendige Steuerleitungen sowie Leitungen für die in diesem Falle erforderliche Positionsrückmeldung, weil derartige Antriebe verhältnismässig störungsanfällig bzw. unzuverlässig sind.

Ziel vorliegender Erfindung ist es, gemäss Anspruch 1 einen Werkzeugwechsler zu schaffen, der einfach aufgebaut ist und zuverlässig arbeitet. Insbesondere erfolgt die Schwenkbewegung des Greifers oder der Greifer rein mechanisch und zwangsläufig, so dass keine Positionsrückmeldung erforderlich ist. Ebenso fallen Steuerleitungen insbesondere für die Schwenkbewegungen des Greifers oder der Greifer weg.

Die Erfindung wird nun anhand eines in der Zeichnung dargestellten Ausführungsbeispiels näher erläutert.
- Fig. 1: zeigt eine Gesamtansicht des Werkzeugwechslers,
- Fig. 2: zeigt eine Teilansicht, teilweise im Schnitt,
- Fig. 3: zeigt eine weitere Teilansicht, teilweise im Schnitt,
- Fig. 4: ist ein Diagramm zur Darstellung der Greifersteuerung mittels einer gemeinsamen Steuerkurve, und
- Fig. 5 und 6: zeigen typische Stellungen des Werkzeugwechslers beim Auswechseln von Werkzeugen in der Spindel der Werkzeugmaschine.

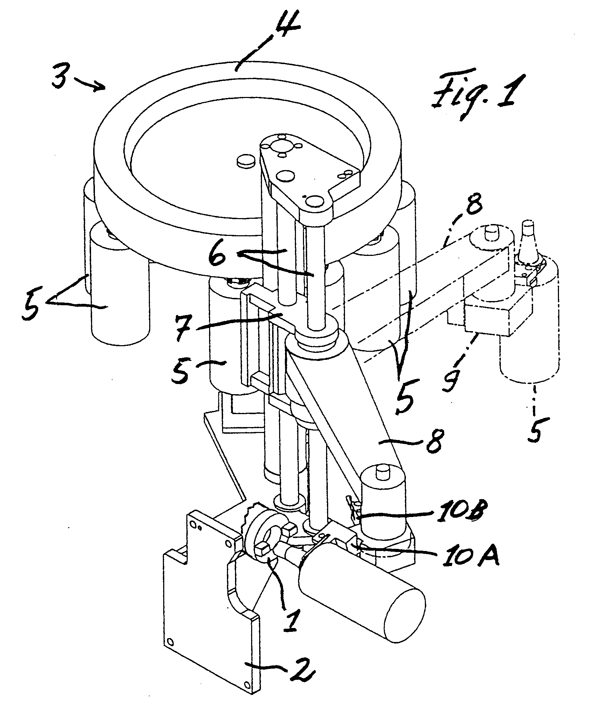

Figur 1 zeigt den Werkzeugwechsler mehr oder weniger schematisch, wobei von der Werkzeugmaschine, an welche der Werkzeugwechsler angebaut ist, zur Vereinfachung nur die Spindel 1 angedeutet ist. Der Werkzeugwechsler ist mittels eines Flansches 2 in nicht näher dargestellter Weise mit der Werkzeugmaschine verbunden. Er weist ein Magazin 3 mit einem karussellartigen Werkzeugträger 4 auf, in welchem schematisch dargestellte Werkzeuge 5 in vertikaler Lage gehalten sind. An zwei vertikalen Führungssäulen 6 ist ein Schlitten 7 vertikal verschiebbar geführt, an welchem ein Schwenkarm 8 in einem gewissen Bereich schwenkbar angebracht ist. Die Antriebe für die Vertikalbewegung des Schlittens 7 und die Schwenkbewegung des Schwenkarmes 8 sind der Einfachheit halber nicht dargestellt, und sie unterscheiden sich nicht von entsprechenden herkömmlichen Antrieben für diese Teile. Die Vertikalbewegungen und Schwenkbewegungen des Armes 8 sind jedenfalls so bemessen, dass Werkzeuge 5 vom Magazin 3 zur Spindel 1 und umgekehrt transferiert werden können. Zu diesem Zwecke ist am Schwenkarm 8 ein Greiferträger 9 mit zwei Greifern 10A und 10B drehbar gelagert. In Figur 1 ist nur der Greifer 10B mit einem Werkzeug 5 bestückt, welches nun dadurch in die Spindel 1 eingesetzt werden kann, dass dieselbe axial vorgeschoben wird, um das Werkzeug 5 zu ergreifen.

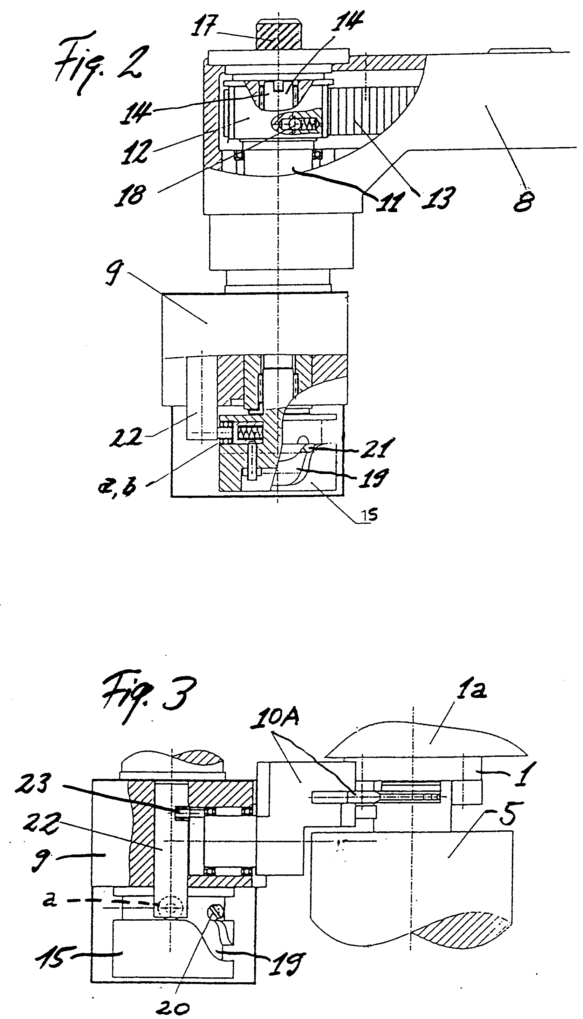

Figur 2 zeigt den Schwenkarm 8 und den Greiferträger 9 teilweise im Schnitt. Der Greiferträger 9 ist über eine Hohlwelle 11 mit einem Zahnrad 12 verbunden, welches über einen im Schwenkarm 8 angeordneten Zahnriemen 13 angetrieben werden kann. In der Hohlwelle 11 ist eine zentrale Achse 14 drehbar gelagert, mit deren unterem Ende eine Kurvenscheibe 15 fest verbunden ist. Die Achse 14 kann wahlweise drehfest mit dem Schwenkarm 8 oder mit dem Zahnrad 12 verbunden werden. Zu diesem Zweck kann ein Verriegelungszahn 16, welcher in eine Nut der Achse 14 eingreift mittels eines Betätigungsknopfes 17 ein- und ausgerückt werden. Bei ausgerücktem Verriegelungszahn 16 bewirkt eine federbelastete Rastkugel 18 die Verbindung der Achse 14 bzw. der Kurvenscheibe 15 mit dem Zahnrad 12. Der Zweck dieser wahlweisen Kuppelbarkeit der Achse 14 entweder mit dem Schwenkarm 8 oder aber mit dem Zahnrad 12 wird unten näher erläutert.

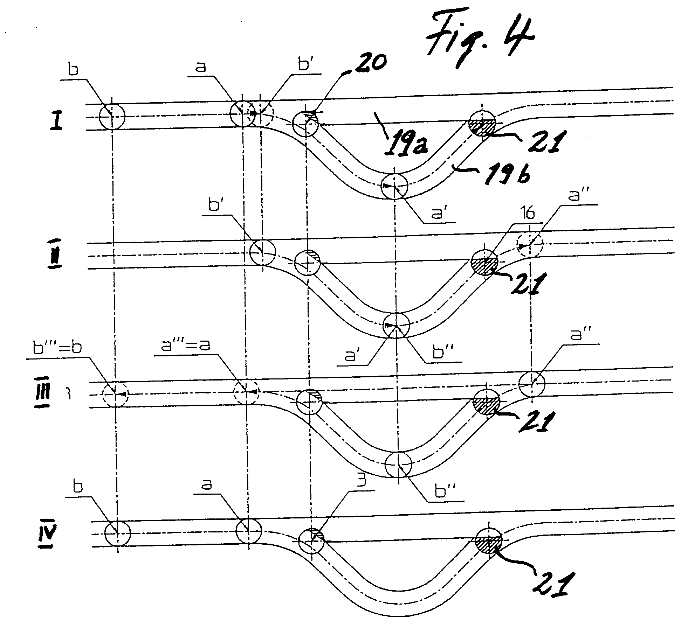

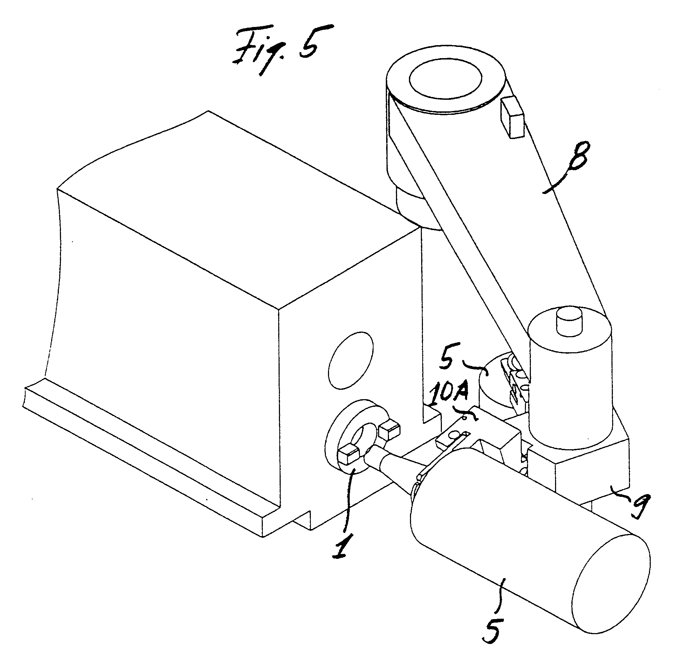

Die Kurvenscheibe 15 ist mit einer Steuerkurve 19 versehen, deren Form in Figur 4 in Abwicklung dargestellt ist. Es handelt sich um eine einheitliche Steuerkurve, die für beide Greifer 10A und 10B wirksam ist. Es ist eine verzweigte Steuerkurve mit einem geraden Teil 15a und einem gekrümmten Teil 15b, dessen beide Enden wieder in den geraden Teil 15a übergehen. An den Verzweigungsstellen sind Weichen in Form von federbelasteten Umlenkstösseln 20 und 21 vorgesehen, welche bewirken, dass in die Steuerkurve 15 greifende Steuerrollen a und b, welche den Greifern 10A und 10B zugeordnet sind bei ihrer Relativbewegung durch die Steuerkurve von links nach rechts in Figur 4 den gekrümmten Ast 15b der Steuerkurve durchlaufen, während sie bei der Bewegung von rechts nach links den geraden Ast 15a durchlaufen. In Figur 4 sind vier Betriebsstadien I - IV dargestellt, auf die später eingetreten wird. In den Figuren 2 und 3 ist je eine in die Steuernut 19 greifende Steuerrolle a bzw. b dargestellt. Jede Steuerrolle ist an einem vertikal verschiebbaren Stössel 22 angebracht, welcher gemäss Figur 3 mittels eines Stiftes 23 die Schwenkbewegung des im Greiferträger 9 gelagerten Greifers, beispielsweise des Greifers 10A (Figur 3) steuert. In Figur 3 ist der dargestellte Greifer 10A mit einem Werkstück 5 besetzt, welches in eine Spindel eingreift, von welcher die Spindelnase 1a dargestellt ist.

Die Schwenkachsen der beiden Greifer 10A und 10B sind im Greiferträger 9 um etwa 90°, im Falle des dargestellten Ausführungsbeispiels um 105° gegeneinander versetzt. Es ist also jeweils eine Schwenkbewegung des Greiferträgers 9 um 105° erforderlich, um den einen oder anderen Greifer in die Stellung zum Auswechseln eines Werkzeugs 5 in der Spindel 1 oder im Magazin 3 zu bringen. Entsprechend sind die Steuerrollen a und b in der Steuerkurve 15 versetzt oder phasenverschoben, wie Figur 4 klar zeigt. Die Steuerung der beiden Greifer erfolgt daher nicht synchron, sondern trotz der gemeinsamen Steuerkurve für beide Greifer individuell nach einem noch zu beschreibenden Ablauf.

Der Werkzeugwechsel bei horizontaler Spindel 1 gemäss Figur 1 hat in der Weise zu erfolgen, dass die im Magazin 3 vertikal angeordneten Werkzeuge 5 bei der Ueberführung zur Spindel oder umgekehrt von der Spindel zum Magazin um 90° aus der vertikalen in die horizontale Lage oder umgekehrt geschwenkt werden müssen. In diesem Falle, also bei horizontaler Spindel 1, wird die Achse 14 bzw. die Kurvenscheibe 15 mit dem Schwenkarm 8 verriegelt, d. h. bei der Verschwenkung des Greiferträgers 9 erfolgt eine Relativbewegung zwischen diesem Greiferträger und der Kurvenscheibe 15 und damit verbunden eine Verschwenkung der Greifer 10A und 10B. Für die folgende Beschreibung wird angenommen, der Schwenkarm 8 mit dem Greiferträger 9 und den Greifern 10A und 10B befinde sich in der strichpunktiert angedeuteten Stellung beim Magazin 3 und übernehme dort ein neues Werkzeug, das in die Spindel 1 einzusetzen ist. Der das Werkzeug aus dem Magazin übernehmende Greifer ist so gerichtet, dass er das Werkzeug in vertikaler Lage übernehmen kann. Während der Verschwenkung des Schwenkarms 8 aus der strichpunktiert dargestellten Stellung beim Magazin in die ausgezogen dargestellte Stellung vor der Spindel 1 erfolgt nun eine Relativbewegung zwischen dem Greiferträger 9 und der Kurvenscheibe 15. Während nämlich die Achse 14 mit dem Schwenkarm 8 gekuppelt ist, wird der Greiferträger 9 mittels des Zahnriemes 13 um +100° geschwenkt. Es erfolgt damit eine Relativbewegung zwischen der Steuerkurve 19 und den in sie eingreifenden Steuerrollen a und b. Die Steuerrolle a gelangt damit in die in Figur 4 I dargestellte Position a', womit der Greifer 10A während der Schwenkbewegung des Schwenkarms 8 um 90° in die Position gemäss Figur 1 geschwenkt worden ist. Damit ist das in vertikaler Position aus dem Magazin 3 übernommene Werkzeug 5 in horizontale Position vor der Spindel 1 gebracht worden, welche jetzt zur Uebernahme dieses Werkzeugs vorgeschoben und nach Erfassen des Werkzeugs und Entfernen des Greifers in die dargestellte Arbeitsposition zurückgezogen werden kann. Wie Figur 4 I zeigt, ist die Steuerrolle b in eine Position b' gelangt, so dass keine Beeinflussung des Greifers 10B erfolgte, und dieser Greifer steht gemäss Figur 1 nach der Schwenkbewegung des Schwenkarms 8 vor die Spindel 1 immer noch in der Position, in welcher er ein vertikal orientiertes Werkzeug übernehmen könnte.

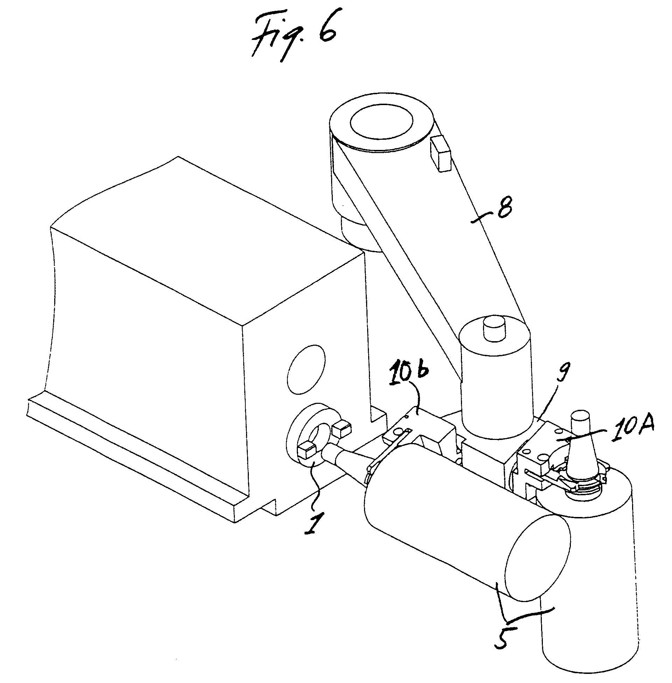

Soll auch der Greifer 10B vor der Spindel 1 derart positioniert werden, dass er ein Werkzeug 5 aus der Spindel übernehmen oder ein neues in dieselbe einsetzen kann, wird der Greiferträger 9 mittels des Zahnriemens 13 um zusätzliche +105° geschwenkt. Damit gelangt der Greifer 10A nach vorne, aus dem Bereich der Spindel 1, während der Greifer 10B in den Bereich vor der Spindel 1 geschwenkt wird. Zugleich erfolgt eine zusätzliche Abwälzung der Steuerrollen a und b auf der Steuerkurve19 , und zwar in die Position, welche in Figur 4 II mit a'' und b'' bezeichnet ist, d. h. der Greifer 10B wird dabei um 90° geschwenkt, um ein horizontalachsiges Werkzeug aus der Spindel zu übernehmen oder in dieselbe einzuführen, und der Greifer 10A ist um 90° geschwenkt worden. Diese Vorgänge sind in den Figuren 5 und 6 dargestellt, d. h. Figur 5 entspricht den Stellungen a' und b' nach Figur 4 I und Figur 6 entspricht dem Zustand gemäss Figur 4 II und den Stellungen a'' bzw. b''. In den Figuren 5 und 6 ist ausserdem angenommen, dass jeweils beide Greifer 10A und 10B ein Werkzeug 5 halten, nämlich ein der Spindel 1 entnommenes Werkzeug und ein stattdessen in die Spindel 1 einzusetzendes Werkzeug.

Während des Rückschwenkens des Schwenkarms 8 aus der Position gemäss Figur 6 zum Magazin 3 wird der Greiferträger 9 mittels des Zahnriemens 13 um -205° in die Ausgangslage zurückgeschwenkt. Dabei wird die Steuerrolle a gemäss Figur 4 III durch dem Umlenkstössel 21 daran gehindert, auf dem gekrümmten Ast 19b der Steuerkurve zurückzulaufen, und sie läuft daher durch den geraden Ast 19a der Steuerkurve zurück in die in Figur 4 III mit a''' = a angegebenen Ausgangsposition. Zugleich läuft die Steuerrolle b aus ihrer Position b'' in die Ausgangsposition b''' = b zurück, welche der Ausgangsposition entspricht, die dann wiederum in der Figur 4 IV dargestellt ist. Dabei erfährt der Greifer 10A keine Drehung, d. h. er bleibt in der Position gemäss Figur 6, aus welcher das Werkzeug 5 in das Magazin übergeben werden kann. Der Greifer 10B wird dagegen in seine Ausgangsposition zurückgeschwenkt, in welcher er ebenfalls ein Werkzeug in das Magazin einsetzen oder ein Werkzeug aus demselben entnehmen kann. Es sei noch erwähnt, dass Figur 6 insofern nicht ganz der Realität entspricht, als in diesem Stadium normalerweise nur ein Greifer ein Werkzeug hält, nämlich das aus der Spindel in das Magazin zurückzuführende Werkzeug, während der andere Greifer soeben ein neues Werkzeug in die Spindel eingesetzt hat und nun leer ist. Die Figuren 5 und 6 sollen jedoch zeigen, dass trotz der Versetzung der Greifer um nur ungefähr 90° keine Kollision zwischen diesen Greifern und insbesondere den darin gehaltenen Werkzeugen stattfinden kann, indem vor der Spindel, wo gleichzeitig beide Greifer ein Werkzeug halten können, die Schwenkbewegungen der Greifer derart aufeinander abgestimmt sind, dass nicht gleichzeitig zwei Werkzeuge in horizontaler Position stehen können.

Bei vielen Werkzeugmaschinen, insbesondere Fräsmaschinen, kann die Spindel 1 wahlweise in horizontale und vertikale Position umgestellt werden. Bei vertikalachsiger Spindel 1 können die Werkzeuge 5 aus dem Magazin 3 entnommen und ohne jede Schwenkung in die vertikalachsige Spindel 1 eingesetzt werden. Es ist somit keine Verschwenkung der Greifer 10A und 10B erforderlich. Um diese Arbeitsweise zu wählen, wird die Verriegelung zwischen dem Schwenkarm 8 und er Achse 14 bzw. der Kurvenscheibe 15 gelöst, d. h. der Verriegelungszahn 16 wird ausgerückt und die Rast 18 hält nun die Welle 11 und die Achse 14 bzw. den Greiferträger 9 und die Kurvenscheibe 15 gegen jede Relativdrehung. Die Steuerrollen a und b bleiben daher stets in der Ausgangsposition gemäss Figur 4 I bzw. Figur 4 IV, d. h. die Greifer werden nie verschwenkt und halten die Werkzeuge 5 stets in vertikaler Position, in welcher sie in die vertikalachsige Spindel 1 eingesetzt oder aus derselben entnommen werden können.

## Patentansprüche

1. Werkzeugwechsler mit mindestens einem zwischen einem Werkzeugmagazin (3) und der Werkzeugaufnahme (1) einer Werkzeugmaschine bewegbaren und schwenkbaren Greifer (10A, 10B) für Werkzeuge (5), dadurch gekennzeichnet, dass der Schwenkantrieb des Greifers (10A, 10B) mittels einer Steuerkurve (19) erfolgt.

2. Wechler nach Anspruch 1, dadurch gekennzeichnet, dass die Steuerkurve (19) in einem Greiferträger (9) angeordnet ist.

3. Wechsler nach Anspruch 1 oder 2, mit zwei Greifern (10A, 10B), dadurch gekennzeichnet, dass beiden Greifern eine gemeinsame Steuerkurve (19) zugeordnet ist.

4. Wechsler nach einem der Ansprüche 1 bis 3, dadurch gekennzeichnet, dass die Greiferschwenkung wahlweise für eine horizontalachsige oder eine vertikalachsige Werkstückaufnahme, z. B. Spindel (1), umstellbar ist.

5. Wechsler nach Anspruch 4, dadurch gekennzeichnet, dass die Schwenkbewegung des bzw. der Greifer (10A, 10B) durch einen programmgesteuerten Antrieb (13) steuerbar ist.

6. Wechsler nach Anspruch 4 oder 5, mit einem Schwenkarm (8) für die Transferbewegung in welchem der Greiferträger (9) drehbar gelagert ist, dadurch gekennzeichnet, dass die Steuerkurve (19) drehbar im Greiferträger (9) gelagert ist und wahlweise mit dem Schwenkarm (8) oder mit einem Drehantrieb (12, 13) für den Greiferträger (9) kuppelbar ist.

7. Wechsler nach Anspruch 6, dadurch gekennzeichnet, dass der Greiferträger (9) von der Drehachse des Schwenkarmes (8) her über eine Kette oder einen Zahnriemen (13) antreibbar ist.

8. Wechsler nach einem der Ansprüche 1 - 7, dadurch gekennzeichnet, dass eine verzweigte Steuerkurve (19, 19a, 19b) mit Weichen (20, 21) vorgesehen ist, welche je nach Laufrichtung unterschiedlich wirkt.

9. Wechsler nach einem der Ansprüche 1 - 8, mit zwei Greifern (10A, 10B), dadurch gekennzeichnet, dass die Schwenkachsen der Greifer (10a, 10b) mindestens annähernd rechtwinklig zueinander stehen.

10. Wechsler nach Anspruch 9, dadurch gekennzeichnet, dass die Greifer (10A, 10B) derart gesteuert sind, dass gleichzeitig mit Werkzeugen (5) besetzte Greifer (10A, 10B) beim Werkzeugtausch an der Aufnahme, z. B. Spindel (1), stets rechtwinklig zueinander orientierte Schwenkstellungen einnehmen.
